# EUROPÄISCHE PATENTSCHRIFT

(11) **EP 1 964 717 B1**
(45) Veröffentlichungstag und Bekanntmachung des Hinweises auf die Patenterteilung: **20.04.2016**
(21) Anmeldenummer: 08102165.1
(22) Anmeldetag: 29.02.2008
(51) Int. Cl.: B60Q 1/14, B60Q 1/10

(54) **Verfahren und Vorrichtung zum Steuern der Lichtabgabe eines Fahrzeugs abhängig vom Verlauf einer Fahrbahn**
Method and device for controlling the light emission of a vehicle dependent on the inclination of a roadway ahead
Procédé et dispositif destinés à la commande de l'émission de lumière d'un véhicule selon le cours de la route

(30) Priorität: 02.03.2007 DE 102007010273
(43) Veröffentlichungstag der Anmeldung: 03.09.2008
(73) Patentinhaber: Hella KGaA Hueck & Co., 59557 Lippstadt (DE)
(72) Erfinder: Hoffmann, Ingo, 10437 Berlin (DE)
(74) Vertreter: Schaumburg und Partner Patentanwälte mbB

(56) Entgegenhaltungen:
- EP-A- 0 869 031
- WO-A-2005/075246
- DE-A1-102004 052 434
- US-A1- 2001 040 810
- US-A1- 2004 052 083
- US-A1- 2007 195 543

## Beschreibung

Die Erfindung betrifft ein Verfahren und eine Vorrichtung zum Steuern der Lichtabgabe eines Fahrzeugs. Aus dem Dokument DE 10 2004 063 836 A1 ist bekannt, mit Hilfe einer im Bereich des Innenspiegels eines Kraftfahrzeugs angeordneten Kamera Bilder aufzunehmen, mit deren Hilfe das Verkehrsgeschehen vor dem Fahrzeug analysiert wird. Abhängig vom analysierten Verkehrsgeschehen wird die Reichweite des Abblendlichtscheinwerfers des Kraftfahrzeugs eingestellt. Die Reichweite des Abblendlichts kann je nach Aufbau des Scheinwerfers mit Hilfe einer Leuchtweitenregulierung, mit Hilfe einer in verschiedene Blendendstellungen drehbaren Blendenwelle, durch die gleitende Absenkung einer Blende, durch eine Leistungsänderung einer oder mehrerer Lichtquellen sowie durch Zuschalten einer oder mehrerer Lichtquellen erfolgen.

Ein Scheinwerfer für Fahrzeuge mit einer solchen Blendenwelle ist aus dem Dokument EP 0 935 728 B1 bekannt. Die Blendenwelle ist in mehrere Drehstellungen drehbar, um verschiedene Lichtfiguren zu erzeugen. Dazu ist die Blendenwelle in Abstrahlrichtung vor der Lichtquelle des Scheinwerfers angeordnet. Mit Hilfe der so erzeugbaren Lichtfiguren kann eine Hell-Dunkel-Grenze variiert werden, sodass der Winkel der Hell-Dunkel-Grenze zum Fahrzeug verändert werden kann.

Aus dem Dokument DE 10 2004 052 434 A1 ist eine Vorrichtung zur Leuchtweitenregulierung von Fahrzeugscheinwerfern bekannt, bei dem ein Bereich vor dem Fahrzeug mit Hilfe eines optischen Abstandssensors erfasst wird. Eine Steuereinheit steuert abhängig vom Messsignal des Abstandssensors die Fahrzeugscheinwerfer an.

Aus dem Dokument US 2001/0040810 A1 sind von einer Steuereinheit angesteuerte Frontscheinwerfer eines Fahrzeugs bekannt, bei denen die Steuereinheit sowohl die Leuchtweite regulieren als auch eine Blende des Scheinwerfers ansteuern kann.

Bei einer bekannten Leuchtweitenregulierung wird der Abstrahlwinkel eines Scheinwerfers durch ein Verschwenken des Scheinwerfers in Abhängigkeit des Beladungszustands eines Kraftfahrzeugs und der damit resultierenden Neigung des Kraftfahrzeugs verändert, um die Hell-Dunkel-Grenze in einem gewünschten Sollwinkel zur Fahrbahn zu positionieren. Steigt die Fahrbahn im Bereich bis zu der zu erzeugenden Hell-Dunkel-Grenze an oder fällt die Fahrbahn in diesem Bereich ab, wird die Hell-Dunkel-Grenze verschoben, und der Bereich vor dem Fahrzeug wird nicht wie gewünscht ausgeleuchtet.

Aufgabe der Erfindung ist es, ein Verfahren und eine Vorrichtung zum Steuern der Lichtabgabe eines Fahrzeugs anzugeben, durch die eine verbesserte Lichtabgabe des Fahrzeugs erreicht wird.

Diese Aufgabe wird durch ein Verfahren mit den Merkmalen des Patentanspruchs 1 und durch eine Vorrichtung mit den Merkmalen des Patentanspruchs 14 gelöst. Vorteilhafte Weiterbildungen der Erfindung sind in den abhängigen Patentansprüchen angegeben.

Mit Hilfe des Verfahrens zum Steuern der Lichtabgabe eines Fahrzeugs mit den Merkmalen des Patentanspruchs 1 wird der vertikale Verlauf der Fahrbahn erfasst. Ausgehend von dem erfassten vertikalen Verlauf der Fahrbahn wird die Lichtabgabe des Fahrzeugs angepasst.

Die Anpassung der Lichtabgabe des Fahrzeugs erfolgt dabei sowohl bei einer im Bereich vor dem Fahrzeug ansteigenden Fahrbahn als auch bei einer im Bereich vor dem Fahrzeug abfallenden Fahrbahn. Die Anpassung der Lichtabgabe des Fahrzeugs an die ansteigende und abfallende Fahrbahn im Bereich vor dem Fahrzeug erfolgt durch eine Leuchtweitenregulierung und die Anpassung der Lichtabgabe zur Verhinderung der Beeinträchtigung anderer Verkehrsteilnehmer erfolgt mit Hilfe einer Blendeneinstellung einer vor der Lichtquelle angeordneten Blendenanordnung bzw. der vor den Lichtquellen angeordneten Blendenanordnungen. Als Blendenanordnung kann die für Xenon-Scheinwerfer entwickelte VarioX-Blendenwelle oder eine andere geeignete Blendenwalze eingesetzt werden. Die Blendeneinstellung erfolgt abhängig vom Abstand des Fahrzeugs zu einem vorausfahrenden Fahrzeug und der Höhendifferenz zwischen dem Fahrzeug und dem vorausfahrenden Fahrzeug.

Dadurch wird erreicht, dass eine für den Fahrzeugführer des Fahrzeugs optimale Ausleuchtung der Fahrbahn im Bereich vor dem Fahrzeug erreicht wird.

Besonders vorteilhaft ist es, den vertikalen Verlauf der Fahrbahn bezüglich des Koordinatensystems des Fahrzeugs zu ermitteln. Der Koordinatenursprung des Fahrzeugkoordinatensystems ist beispielsweise in der Mitte zwischen den beiden Vorderrädern auf der Fahrbahn definiert, wobei die X-Achse des Koordinatensystems parallel zur Längsachse des Fahrzeugs verläuft. Die mit Hilfe der Lichtabgabe des Fahrzeugs zu erzeugende Hell-Dunkel-Grenze im Bereich vor dem Fahrzeug ist so eingestellt, dass sie bei Verkehrsverhältnissen, bei denen keine Rücksicht auf weitere Verkehrsteilnehmer zu nehmen ist, einen Sollabstand von etwa 60 bis 80 Metern vor dem Fahrzeug aufweist. Ohne ein erfindungsgemäßes Anpassen der Lichtabgabe verkürzt sich bei einem Anstieg der Fahrbahn in diesem Bereich zwischen dem Fahrzeug und dem Sollabstand der Hell-Dunkel-Grenze der tatsächliche Abstand der Hell-Dunkel-Grenze zum Fahrzeug abhängig vom Grad des Anstiegs vor dem Fahrzeug. Bei einem abfallenden vertikalen Verlauf der Fahrbahn vor dem Fahrzeug vergrößert sich der tatsächliche Abstand der Hell-Dunkel-Grenze oder es wird gar keine Hell-Dunkel-Grenze mehr auf der Fahrbahn erzeugt. Durch das erfindungsgemäße Anpassen der Lichtabgabe des Fahrzeugs an den ermittelten vertikalen Verlauf der Fahrbahn wird eine Verschiebung der Hell-Dunkel-Grenze, die zu einer ungenügenden Ausleuchtung des Bereichs vor dem Fahrzeugs führt, auf einfache Art und Weise wirkungsvoll vermieden.

Der vertikale Verlauf der Fahrbahn kann insbesondere mit Hilfe der durch ein Navigationssystem bereitgestellten Daten und/oder mit Hilfe der durch ein Kamerasystem erfassten Bilder sowie deren Verarbeitung ermittelt werden.

Als vertikaler Verlauf der Fahrbahn kann eine Änderung des Anstiegs der Fahrbahn ermittelt werden, wobei eine ansteigende Fahrbahn im Bereich vor dem Fahrzeug als positiver Anstieg und eine abfallende Fahrbahn im Bereich vor dem Fahrzeug als negativer Anstieg weiterverarbeitet wird. Alternativ oder zusätzlich kann ein Neigungswinkel zwischen der X-Achse des Koordinatensystems des Fahrzeugs und einer Geraden ermittelt werden, die durch den Koordinatenursprung und durch einen Schnittpunkt einer im Sollabstand mit Hilfe mindestens eines Scheinwerfers des Fahrzeugs zu erzeugenden Hell-Dunkel-Grenze mit der Fahrbahn verläuft. Ferner kann alternativ oder zusätzlich die Höhendifferenz, d. h. der Abstand, zwischen der X-Achse und der Fahrbahn im Sollabstand der mit Hilfe mindestens eines Scheinwerfers des Fahrzeugs zu erzeugenden Hell-Dunkel-Grenze ermittelt werden. Dabei wird bei einer gegenüber der X-Achse ansteigenden Fahrbahn eine positive Höhendifferenz und bei einer gegenüber der X-Achse abfallenden Fahrbahn eine negative Höhendifferenz ermittelt.

Durch eine Vorrichtung zum Steuern der Lichtabgabe eines Fahrzeugs mit den Merkmalen des Patentanspruchs 14 können die gleichen Vorteile erzielt werden wie durch das Verfahren nach Patentanspruch 1. Ferner kann diese Vorrichtung auf die gleiche Weise weitergebildet werden wie für das Verfahren nach Anspruch 1 insbesondere in den abhängigen Patentansprüchen angegeben.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: die schematische Darstellung einer Verkehrssituation mit zwei auf einer ebenen Fahrbahn hintereinander fahrenden Fahrzeugen, wobei die mit Hilfe der Scheinwerfer des nachfolgenden Fahrzeugs erzeugte Ausleuchtung der Fahrbahn dargestellt ist,
- Figur 2: eine Verkehrssituation nach Figur 1, wobei die Fahrzeuge einen größeren Abstand zueinander haben,
- Figur 3: eine Verkehrssituation mit den beiden Fahrzeugen nach Figur 1, bei der die Fahrbahn vor dem nachfolgenden Fahrzeug ansteigt,
- Figur 4: die Verkehrssituation nach Figur 3, wobei die Lichtabgabe des nachfolgenden Fahrzeugs dem Fahrbahnanstieg und dem vorausfahrenden Fahrzeug angepasst ist,
- Figur 5: die Verkehrssituation nach den Figuren 3 und 4, wobei die Fahrzeuge einen größeren Abstand zueinander haben,
- Figur 6: eine Abbildung einer Verkehrssituation ähnlich der Verkehrssituation nach den Figuren 3 bis 5, die mit Hilfe einer in einem Fahrzeug angeordneten Kamera aufgenommen worden ist,
- Figur 7: eine Verkehrssituation mit den beiden Fahrzeugen nach Figur 1, bei der die Fahrbahn vor dem nachfolgenden Fahrzeug abfällt,
- Figur 8: die Verkehrssituation nach Figur 7, wobei die Lichtabgabe des nachfolgenden Fahrzeugs abfallenden Fahrbahn und dem vorausfahrenden Fahrzeug angepasst ist,
- Figur 9: die Verkehrssituation nach den Figuren 7 und 8, wobei die Fahrzeuge einen größeren Abstand zueinander haben, und
- Figur 10: eine Abbildung einer Verkehrssituation ähnlich den Verkehrssituationen nach den Figuren 7 bis 9, die mit Hilfe einer in einem Fahrzeug angeordneten Kamera aufgenommen worden ist.

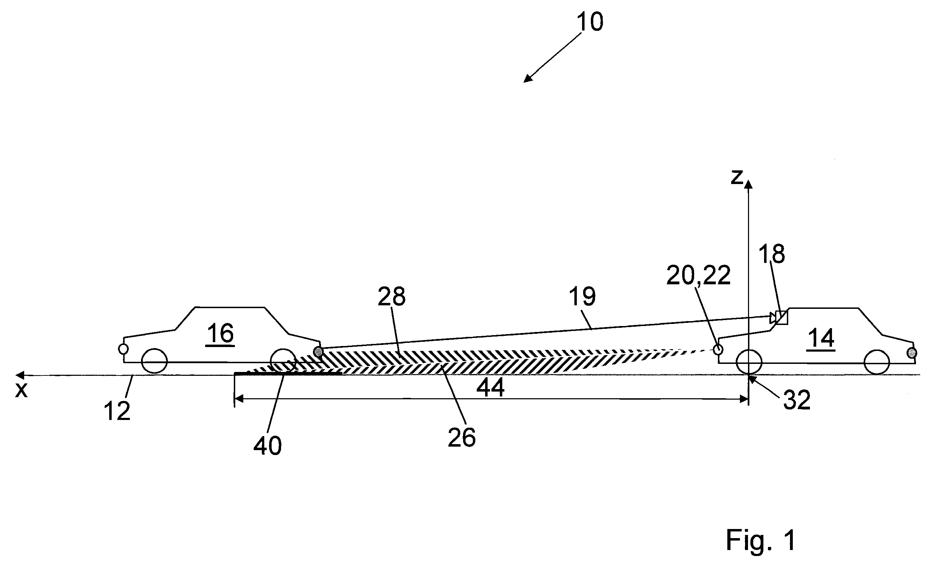

In Figur 1 ist eine Verkehrsituation 10 mit zwei Fahrzeugen 14, 16 dargestellt. Die Fahrzeuge 14, 16 fahren hintereinander auf einer ebenen Fahrbahn 12, wobei das Fahrzeug 16 ein zum Fahrzeug 14 vorausfahrendes Fahrzeug ist. Das Fahrzeug 14 weist eine Vorrichtung zum Steuern der Lichtabgabe seiner Xenon-Frontscheinwerfer 20, 22 auf. Das Fahrzeug 16 fährt auf der gleichen Fahrspur der Fahrbahn 12 wie das Fahrzeug 14 und bildet den zum Fahrzeug 14 nächstkommenden vorausfahrenden Verkehr. Der Abstrahlwinkel der Frontscheinwerfer 20, 22 ist im vorliegenden Ausführungsbeispiel mit einer Leuchtweitenregulierung veränderbar. Mit Hilfe dieser Leuchtweitenregulierung kann die Neigung der Frontscheinwerfer 20, 22 zur Fahrzeuglängsachse geändert werden, sodass der vertikale Abstrahlwinkel aller von den Scheinwerfern 20, 22 abgestrahlten Lichtstrahlen geändert wird. Ferner sind die Frontscheinwerfer 20, 22 mit einer VarioX-Blendenwelle ausgestattet, die jeweils vor den Xenon-Lichtquellen / der Xenon-Lichtquelle jedes Frontscheinwerfers 20, 22 angeordnet ist. Die VarioX-Blendenwellen sind für die Verwendung in Xenon-Schweinwerfersystemen optimiert. Mit Hilfe einer VarioX-Blendenwelle können verschiedene Lichtfiguren erzeugt werden, die unterschiedliche Ausleuchtungen des Bereichs vor dem Fahrzeug 14 bewirken.

Das Fahrzeug 14 weist eine Bilderfassungseinheit 18 auf, die vorzugsweise nahe dem Innenspiegel hinter der Windschutzscheibe des Kraftfahrzeugs 14 angeordnet ist. Die Bilderfassungseinheit 18 erzeugt vorzugsweise mit Hilfe eines CMOS-Pixel-Arrays Bilder, die mit Hilfe eines Analog-Digital-Wandlers in digitale Bilddaten umgewandelt werden. Für jeden Bildpunkt des CMOS-Pixel-Arrays wird dabei ein Helligkeitswert ermittelt. Vorzugsweise werden mit Hilfe der Bilderfassungseinheit 18 Graustufenbilder und keine Farbbilder erfasst, da die spektralen Helligkeiten üblicher Grundfarben, insbesondere bei der Farbbilderfassung bei relativ kleinen auf dem CMOS-Pixel-Array abgebildeten Helligkeitsbereichen, insbesondere bei Verwendung von Farbrastern, wie beispielsweise aber nicht ausschließlich dem Bayer-Pattern, nicht immer korrekt erfasst werden können. Beim Erfassen von Graustufenbildern, bei dem nur die Gesamthelligkeit jedes Bildpunkts (Pixel) erfasst wird, vermeidet man diese Probleme, wodurch die Helligkeit einer Strahlungsquelle (Lichtquelle oder lichtreflektierendes Element) relativ genau ermittelt werden kann, sodass der für einen Bildpunkt ermittelte Helligkeitswert bei der Weiterverarbeitung als zuverlässig angesehen werden kann.

Die Bilderfassungseinheit 18 weist ferner ein geeignetes optisches System zum Abbilden des gesamten für das Steuern der Lichtabgabe relevanten Bereichs vor dem Fahrzeug 14 auf das CMOS-Pixel-Array auf, sodass auf den mit Hilfe der Bilderfassungseinheit 18 erfassten Bildern das vorausfahrende Fahrzeug 16 und gegebenenfalls entgegenkommende Fahrzeuge, Straßenlampen und Leitpfosten sowie weitere lichtabstrahlende Elemente im Bereich vor dem Fahrzeug 14 auf der Bildaufnahmefläche des CMOS-Pixel-Arrays abgebildet werden. Bei Dunkelheit werden von der Bilderfassungseinheit 18 im Wesentlichen nur die aktuell lichtabstrahlenden Lichtquellen sowie die aktuellen lichtreflektierenden Elemente als helle Bereiche in den aufgenommenen Bildern erfasst.

Zur Leuchtweitenregulierung und zum Einstellen der gewünschten Position der jeweiligen Blendenwelle weisen die Scheinwerfer 20, 22 Stellantriebe auf. Vorzugsweise weisen die Scheinwerfer 20, 22 des Fahrzeugs 14 Steuereinheiten auf, die über ein CAN-Bus-System mit weiteren Steuereinheiten des Fahrzeugs 14 verbunden sind. Die Bilderfassungseinheit 18 ist ebenfalls vorzugsweise über das CAN-Bus-System mit weiteren Steuereinheiten des Fahrzeugs 14, insbesondere mit den Steuereinheiten der Steuersysteme der Scheinwerfer 20, 22, verbunden. Die Lichtsteuerung des Fahrzeugs 14 soll dabei so erfolgen, dass eine insbesondere für den Fahrzeugführer des Fahrzeugs 14, aber auch alle anderen Verkehrsteilnehmer, deren Wahrnehmungsbereich im Ausleuchtbereich der Scheinwerfer 20,22 des Fahrzeugs 14 liegt, optimale Ausleuchtung der Fahrbahn 12 erfolgt und weder der vorausfahrende Verkehr (Fahrzeug 16) noch der in Figur 1 nicht dargestellte entgegenkommende Verkehr geblendet und dadurch behindert werden.

Die von der Bilderfassungseinheit 18 fortlaufend als Bildfolge aufgenommenen Bilder des relevanten Bereichs vor dem Fahrzeug 14 werden von einer Bildverarbeitungseinheit ausgewertet. Der Verlauf der Fahrbahn 12, insbesondere der vertikale Verlauf der Fahrbahn 12, kann durch eine entsprechende Analyse der mit Hilfe der Bilderfassungseinheit 18 erfassten Bilder durch die Bildverarbeitungseinheit ermittelt werden. Weiterhin können dem Steuersystem zum Steuern der Lichtabgabe des Fahrzeugs 14 Daten des Navigationssystems des Fahrzeugs 14 zur Verfügung stehen, die auch Angaben über den vertikalen Verlauf der Fahrbahn 12 im Bereich des mit Hilfe der Scheinwerfer 20, 22 ausleuchtbaren Bereichs vor dem Fahrzeug 14 umfassen. Insbesondere kann die absolute Höhendifferenz zwischen der Fahrbahn 12 im Bereich des Fahrzeugs 14 und der Fahrbahn 12 in einer Sollentfernung zum Fahrzeug 14 mit Hilfe von Kartendaten des Navigationssystems oder einer anderen geeigneten Datenquelle ermittelt und ausgegeben werden. Wird zusätzlich, beispielsweise über einen Neigungssensor, die Neigung des Kraftfahrzeugs 14 ermittelt, kann die Höhendifferenz der Fahrbahn 12 auch in Bezug auf die X-Achse eines Koordinatensystems des Fahrzeugs 14 ermittelt werden, dessen Koordinatenursprung 32 in der Mitte zwischen den beiden Vorderrädern des Fahrzeugs 14 angeordnet ist. Die X-Achse des Koordinatensystems verläuft im Wesentlichen parallel zur Fahrzeuglängsachse des Fahrzeugs 14.

Die Scheinwerfer 20, 22 des Fahrzeugs 14 sind mit Hilfe der Leuchtweitenregulierung in eine solche Position gebracht worden, dass in einem Sollabstand 44 ein Bereich 40 mit hoher Lichtintensität bestrahlt wird. Dieser Bereich 40 wird auch als Spotbereich bezeichnet. Das vom Fahrzeug 14 entfernte Ende des Bereichs 40 ist die durch die Lichtabgabe der Scheinwerfer 20, 22 bewirkte Hell-Dunkel-Grenze. Durch das Ändern der Lichtabstrahlung der Scheinwerfer 20, 22 mit Hilfe der Leuchtweitenregulierung und/oder der VarioX-Blendenwalze können die von den Scheinwerfern 20, 22 abgegebenen Lichtstrahlen angehoben bzw. der Bereich, in den die Lichtstrahlen abgegeben werden, nach oben begrenzt oder erweitert sowie der Abstrahlwinkel der Lichtstrahlen verändert werden. Der obere von links oben nach rechts unten schraffierte Bereich 28 gibt den Bereich an, um den die abgegebene Lichtstrahlung mit Hilfe der VarioX-Blendenwelle weiter nach oben hin begrenzt werden kann. Der Bereich 28 und der von links unten nach rechts oben schraffierte Bereich 26, der nicht mit Hilfe der VarioX-Blendenwelle begrenzbar ist, können mit Hilfe der Leuchtweitenregulierung gemeinsam weiter nach oben sowie weiter nach unten verschwenkt werden.

Das Fahrzeug 16 wird mit Hilfe der Bilderfassungseinheit 18 anhand seiner Rücklichter erfasst. Die Rücklichter des Fahrzeugs 16 liegen auf einer Sichtlinie 19 der Bilderfassungseinheit 18. Mit Hilfe der Bilderfassungseinheit 18 und der anschließenden Bildauswertung der aufgenommenen Bilder können die durch die Rücklichter des Fahrzeugs 16 erzeugten hellen Bereiche in den aufgenommenen Bildern als Rücklichter des Fahrzeugs 16 klassifiziert werden. Ausgehend von dieser Klassifikation erfolgt eine Kategorisierung des Fahrzeugs 16 und der dazu erforderlichen Bewertung von verschiedenen Analyseergebnissen von mehreren vorzugsweise parallel durchgeführten Analysen zum Bewerten von Objekten. Für das Fahrzeug 16 bzw. für dessen Rücklichter wird die Kategorie "in geringer Entfernung vorausfahrendes Fahrzeug" ermittelt. Ausgehend von dieser Kategorie wird festgelegt, dass das von den Scheinwerfern 20, 22 des Fahrzeugs 14 abgegebene Licht die Fahrbahn 12 und die Rückseite des vorausfahrenden Fahrzeugs 16 bis zu dessen Rücklichtern ausleuchten kann, ohne den Fahrzeugführer des vorausfahrenden Fahrzeugs 16 durch das abgegebene Licht zu blenden. Dazu wird der Bereich 28 derart begrenzt, dass die Ausleuchtung des Bereichs vor dem Fahrzeug 14 nur bis zur Höhe der Rücklichter des Fahrzeugs 16 erfolgt, wodurch eine optimale Ausleuchtung des Bereichs vor dem Fahrzeug 14 unter Berücksichtigung des vorausfahrenden Fahrzeugs 16 erreicht wird.

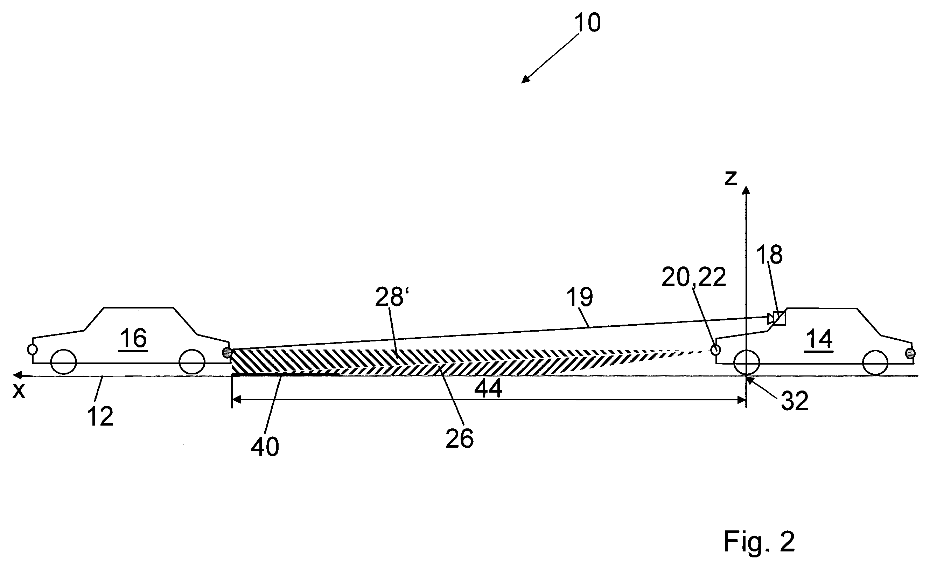

In Figur 2 ist die Verkehrssituation 10 nach Figur 1 dargestellt, wobei die Fahrzeuge 14, 16 einen größeren Abstand zueinander haben. Elemente mit der gleichen Funktion haben dieselben Bezugszeichen.

Durch die größere Entfernung zwischen den Fahrzeugen 14, 16 kann der in Figur 1 durch die VarioX-Blendenwalze nach oben begrenzte Bereich 28 auf den Bereich 28' erweitert werden, sodass auch bei der größeren Entfernung zwischen den Fahrzeugen 14, 16 eine Ausleuchtung bis zu den Rücklichtern des Fahrzeugs 16 erfolgt und dadurch eine optimale Ausleuchtung des Bereichs vor dem Fahrzeug 14 unter Berücksichtigung des weiteren Fahrzeugs 16 erfolgt. Die Einstellung der Leuchtweitenregulierung der Scheinwerfer 20, 22 in der Verkehrssituation 10 nach den Figuren 1 und 2 stimmen überein, sodass der Bereich 26 in den Figuren 1 und 2 gleich ist.

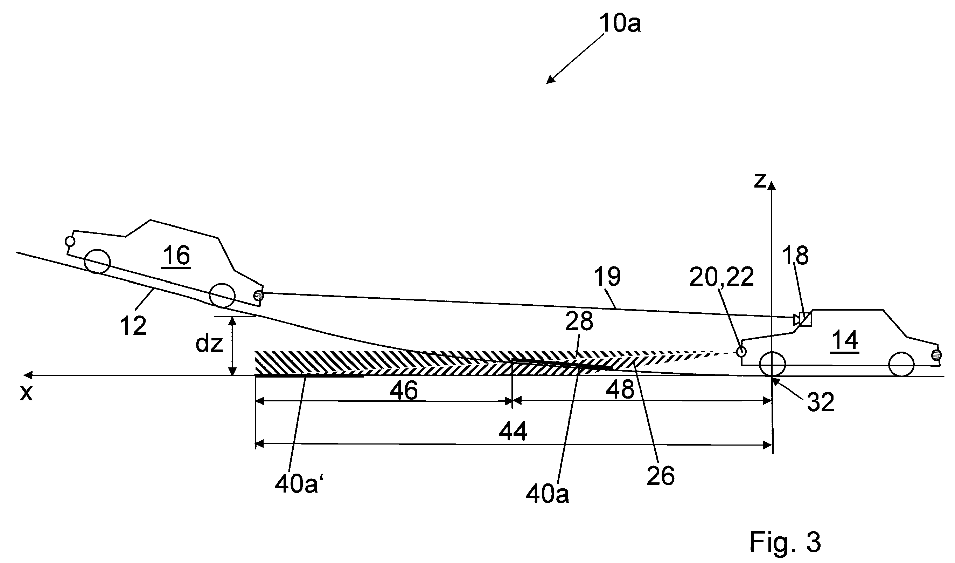

In Figur 3 ist eine Verkehrssituation 10a ähnlich der Verkehrssituation 10 nach den Figuren 1 und 2 dargestellt. Im Unterschied zu der Verkehrssituation 10 nach den Figuren 1 und 2 steigt bei der Verkehrssituation 10a die Fahrbahn 12 im Bereich vor dem Fahrzeug 14 bis zum vorausfahrenden Fahrzeug 16 hin an. Bei einer Einstellung der Hell-Dunkel-Grenze der Scheinwerfer 20, 22 auf den Sollabstand 44 erfolgt eine Lichtabstrahlung in den Bereichen 26, 28, sodass der Bereich 40a auf der Fahrbahn 12 mit hoher Lichtintensität bestrahlt wird und nicht ein weiter entfernt liegender Bereich 40a', der bei einem ebenen Verlauf 12' der Fahrbahn 12 mit hoher Lichtintensität bestrahlt werden würde. Dadurch ist die Reichweite des tatsächlich ausgeleuchteten Bereichs vor dem Fahrzeug 14 reduziert, sodass der Istabstand 48 der Hell-Dunkel-Grenze gegenüber dem Sollabstand 44 ohne eine Korrektur der Lichtabgabe durch die Scheinwerfer 20, 22 des Fahrzeugs 14 um die Strecke 46 reduziert ist.

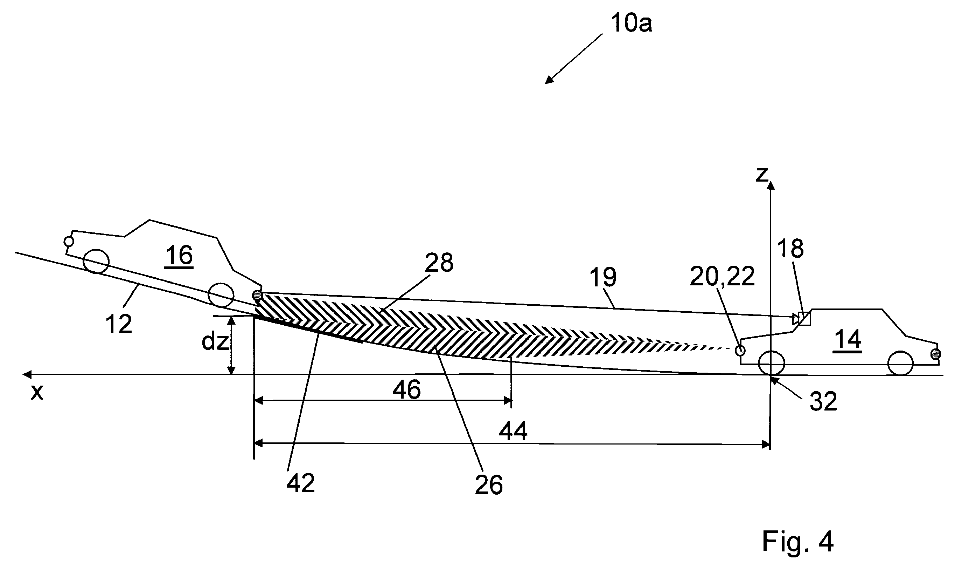

In Figur 4 ist die Verkehrssituation 10a nach Figur 3 dargestellt, wobei die Lichtabgabe der Scheinwerfer 20, 22 des Fahrzeugs 14 dem Anstieg der Fahrbahn 12 und dem vorausfahrenden Fahrzeug 16 durch ein Anheben der Lichtstrahlen, die von den Scheinwerfern 20, 22 zum Ausleuchten des Bereichs vor dem Fahrzeug 14 abgegeben werden, angepasst worden sind. Dadurch ist eine Reichweitenkorrektur um die Strecke 46 bewirkt worden. Durch das Anheben der Lichtabstrahlung wird ferner der Bereich 42 auf der Fahrbahn 12 mit hoher Lichtintensität beleuchtet, sodass die Hell-Dunkel-Grenze im Sollabstand 44 erzeugt wird. Vorteilhaft ist es, die aufgrund der Änderungen des Anstiegs der Fahrbahn 12 erforderliche Korrektur durch die Leuchtweitenregulierung der Scheinwerfer 20, 22 des Fahrzeugs 14 vorzunehmen und die Begrenzung der Lichtabgabe auf Grund der weiteren relevanten Verkehrsteilnehmer, die durch das abgestrahlte Licht behindert werden könnten, mit Hilfe der VarioX-Blendenwelle einzustellen.

Wird als Bilderfassungseinheit 18 eine Monokamera oder eine Einzelkamera eines Stereokamerasystems genutzt, kann ein zweidimensionales Messverfahren zur Positionsbestimmung des vorausfahrenden Fahrzeugs 16 und ggf. weiterer relevanter Verkehrsteilnehmer durchgeführt werden. Bei der Verwendung eines Stereokamerasystems als Bilderfassungseinheit 18 kann ein dreidimensionales Messverfahren zur Positionsbestimmung des vorausfahrenden Fahrzeugs 16 und ggf. weiterer relevanter Verkehrsteilnehmer durchgeführt werden, durch das eine genauere Positionsbestimmung als bei einem zweidimensionalen Messverfahren möglich ist. Durch die genauere Erfassung des Objekts bei der Erfassung mit Hilfe des dreidimensionalen Messverfahrens kann die Hell-Dunkel-Grenze näher an das Objekt, beispielsweise bis an die Rücklichter eines vorausfahrenden Fahrzeugs, herangeführt und dadurch der ausgeleuchtete Bereich weiter vergrößert werden als bei einer Positionsbestimmung mit Hilfe eines zweidimensionalen Messverfahrens.

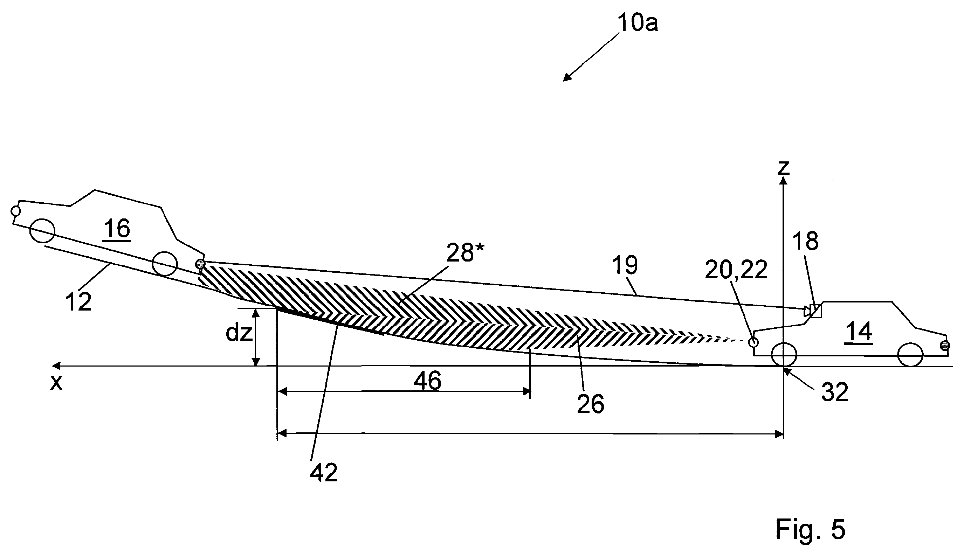

In Figur 5 ist die Verkehrssituation 10a nach den Figuren 3 und 4 dargestellt, wobei die Fahrzeuge 14, 16 gegenüber den Figuren 3 und 4 einen größeren Abstand zueinander haben. Durch den größeren Abstand sowie durch die größere Höhendifferenz der Fahrzeuge 14, 16 zueinander kann die Blendeneinstellung mit Hilfe der VarioX-Blendenwalze weiter verändert werden, sodass der in Figur 3 auf den Bereich 28 und in Figur 4 auf den Bereich 28' mit Hilfe der Blendenwalze begrenzte obere Bereich des von den Scheinwerfern 20, 22 abgegebenen Lichts auf den Bereich 28* vergrößert werden kann, sodass eine Ausleuchtung bis zu den Rücklichtern des Fahrzeugs 16 erfolgt.

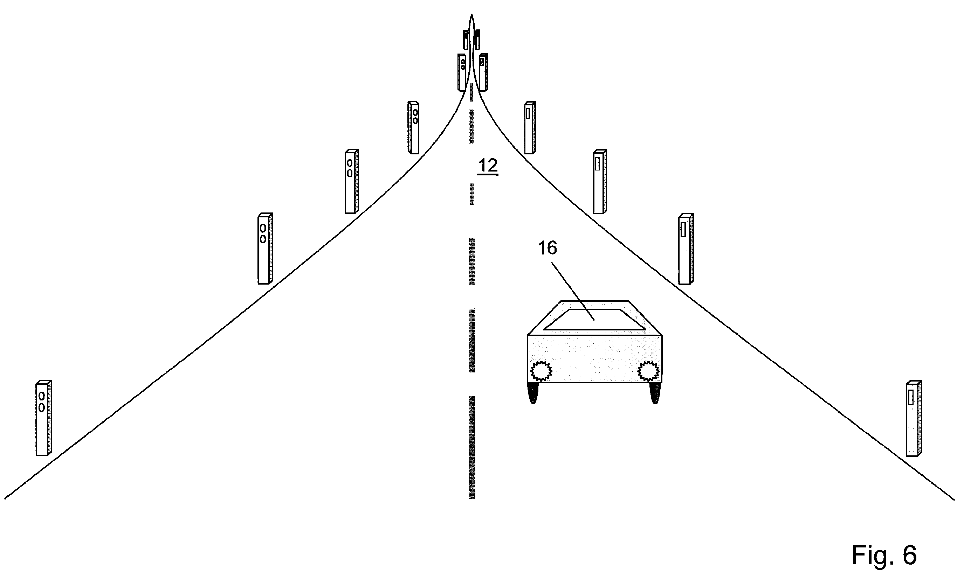

In Figur 6 ist eine Aufnahme einer Verkehrssituation ähnlich der Verkehrssituation 10a nach den Figuren 3 bis 5 gezeigt, die mit Hilfe einer im nachfolgenden Fahrzeug 14 angeordneten Kamera 18 aufgenommen worden ist. Die Fahrbahn 12 steigt bei der in Figur 6 dargestellten Verkehrssituation jedoch erst vor dem vorausfahrenden Fahrzeug 16 an.

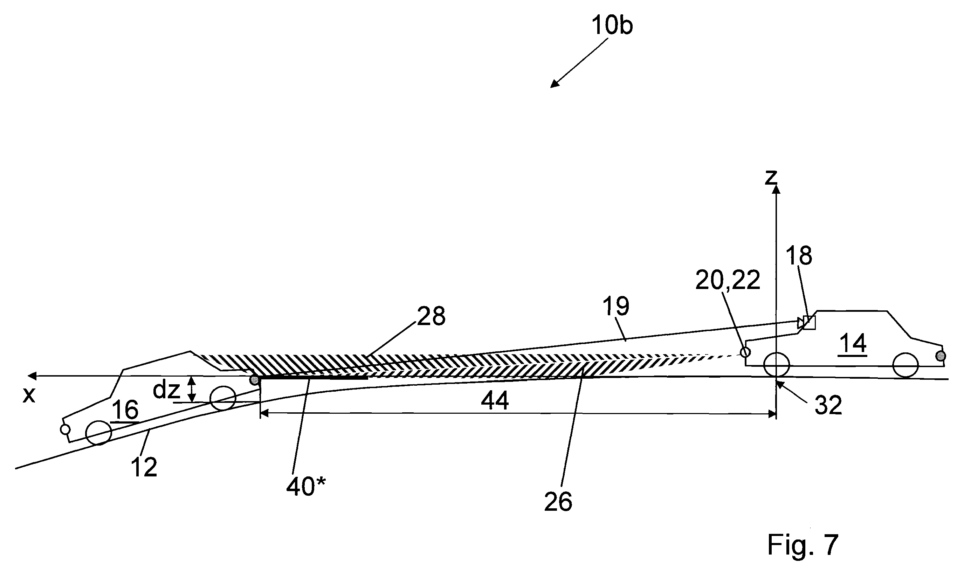

In Figur 7 ist eine Verkehrssituation 10b ähnlich den Verkehrssituationen 10 und 10a nach den Figuren 1 bis 6 dargestellt, wobei die Fahrbahn 12 im auszuleuchtenden Bereich vor dem Fahrzeug 14 einen negativen Anstieg hat und abfällt. Die von den Scheinwerfern 20, 22 abgegebenen Lichtstrahlen würden im dargestellten Ausführungsbeispiel nach Figur 7 in keinem Bereich auf der Fahrbahn 12 eine hohe Lichtintensität erzeugen, sondern über die Fahrbahn 12 hinweg strahlen, wobei durch die abgegebenen Lichtstrahlen der Fahrzeugführer des vorausfahrenden Fahrzeugs 16 geblendet werden würde. Bei einer ebenen Fahrbahn 12 entlang der X-Achse würde durch die Scheinwerfer 20, 22 im Sollabstand 44 ein Bereich 40* mit hoher Lichtintensität erzeugt werden.

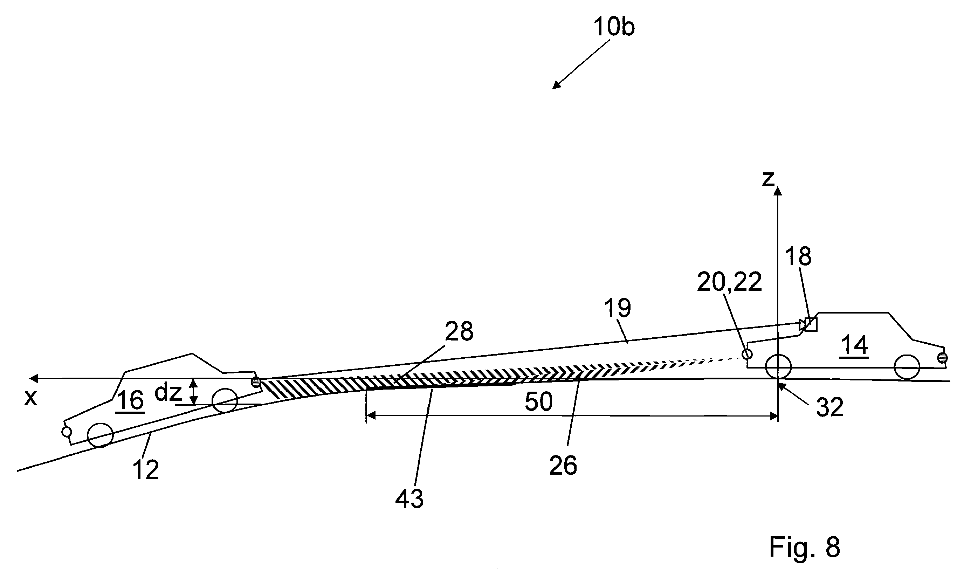

Wird die Höhendifferenz dz zwischen der X-Achse des Fahrzeugs 14 und der Fahrbahn im Sollabstand 44 der Hell-Dunkel-Grenze ermittelt, kann die Lichtabgabe der Scheinwerfer 20, 22 entsprechend abgesenkt werden, sodass der Bereich bis zum Sollabstand 44 der Hell-Dunkel-Grenze ausgeleuchtet werden kann. Treffen die von den Scheinwerfern 20, 22 abgegebenen Lichtstrahlen aufgrund der abfallenden Fahrbahn 12 nicht unmittelbar vor den Sollabstand 44 der Hell-Dunkel-Grenze auf der Fahrbahn 12 auf, nämlich dann, wenn sich der Sollabstand 44 der Hell-Dunkel-Grenze auf der Fahrbahn 12 in einem durch die Fahrbahn 12 erzeugten Schattenbereich befindet, treffen die von den Scheinwerfern 20, 22 abgegebenen Lichtstrahlen in einem Bereich näher dem Fahrzeug 14 auf die Fahrbahn 12, sodass sich für die Hell-Dunkel-Grenze ein Istabstand 50 ergibt, wie in Figur 8 gezeigt. Der Istabstand 50 ist der größtmögliche Abstand des ausleuchtbaren Bereichs 43* vor dem Fahrzeug 14, in den die Scheinwerfer 20, 22 Licht mit einer hohen Lichtintensität auf die Fahrbahn 12 abstrahlen können und der von dem Fahrzeugführer des Fahrzeugs 14 einsehbar ist. Durch das Absenken und/oder Begrenzen der von den Scheinwerfern 20, 22 abgegebenen Lichtstrahlen wird der Bereich 43* auf der Fahrbahn 12 mit einer hohen Lichtintensität bestrahlt, wodurch für den Fahrzeugführer des Fahrzeugs 14 eine optimale Ausleuchtung der Fahrbahn 12 im Bereich vor seinem Fahrzeug 14 erreicht wird, ohne den Fahrzeugführer des vorausfahrenden Fahrzeugs 16 zu blenden.

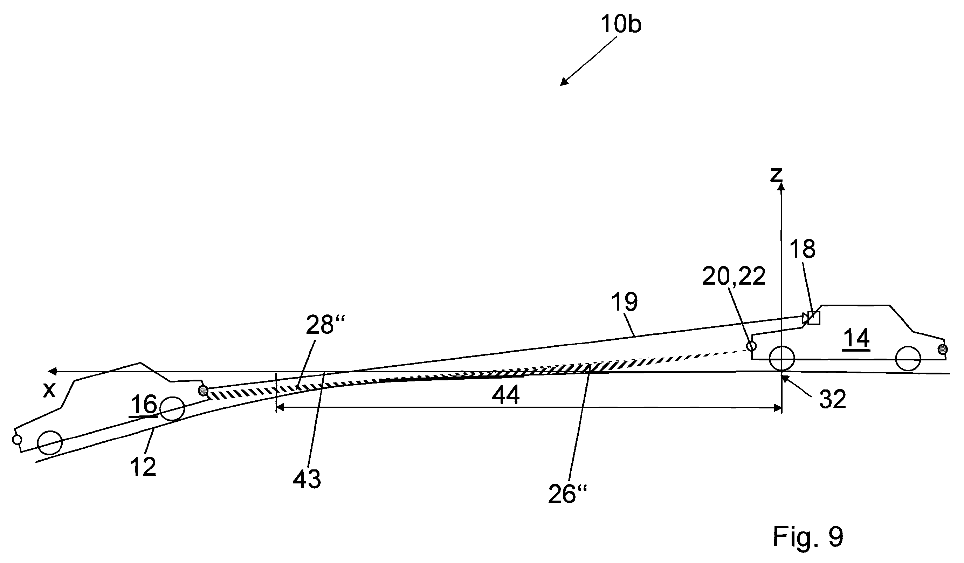

In Figur 9 ist die Verkehrssituation 10b nach den Figuren 7 und 8 gezeigt, wobei das Fahrzeug 16 einen größeren Abstand und eine größere Höhendifferenz zum Fahrzeug 14 aufweist als in den Figuren 7 und 8. Durch die größere Höhendifferenz der Fahrzeuge 14 und 16 zueinander würde der Fahrzeugführer des Fahrzeugs 16 auch bei den durch die schraffierten Flächen in Figur 8 angegebenen Lichtabgabebereich der Scheinwerfer 20, 22 geblendet werden. Mit Hilfe der VarioX-Blendenwalze wird das von den Scheinwerfern 20, 22 des Fahrzeugs 14 abgegebene Licht weiter von oben her begrenzt, sodass der Fahrzeugführer des Fahrzeugs 16 auch bei einer größeren Höhendifferenz, d. h. bei einer tieferen eigenen Position gegenüber dem Fahrzeug 14 nicht durch das von den Scheinwerfern 20, 22 des Fahrzeugs 14 abgegebene Licht behindert wird. Mit Hilfe der VarioX-Blendenwalze wird das von den Scheinwerfern 20, 22 abgegebene Licht somit auf den Bereich 28" des Stellbereichs der VarioX-Blendenwalze begrenzt und somit insgesamt auf die Bereiche 28" und 26". Die Anpassung an die abfallende Fahrbahn erfolgt wie bei der ansteigenden Fahrbahn vorzugsweise mit Hilfe der Leuchtweitenregulierung der Scheinwerfer 20, 22, durch die der Abstrahlwinkel der von den Scheinwerfern 20, 22 abgegebenen Lichtstrahlen derart verändert wird, dass die von den Scheinwerfern 20, 22 abgegebenen Lichtstrahlen nach unten zur Fahrbahn hin abgesenkt werden. Sollte die Anpassung des Stellbereichs 28, 28" insbesondere aufgrund einer zu großen Höhendifferenz zwischen den Fahrzeugen 14, 16 bei einer abfallenden und/oder ansteigenden Fahrbahn nicht ausreichen, um eine Behinderung weiterer Verkehrsteilnehmer zu vermeiden, erfolgt zusätzlich oder alternativ eine Einstellung der Lichtabstrahlung des Fahrzeugs 14 mit Hilfe der Leuchtweitenregulierung des Fahrzeugs 14. Im vorliegenden Ausführungsbeispiel ist das Fahrzeug 16 der einzige weitere Verkehrsteilnehmer. In anderen Ausführungsbeispielen können zusätzlich oder alternativ zu Fahrzeug 16 andere Verkehrsteilnehmer vorhanden sein, die bei der Einstellung der Lichtabstrahlung des Fahrzeugs 16 berücksichtigt werden müssen.

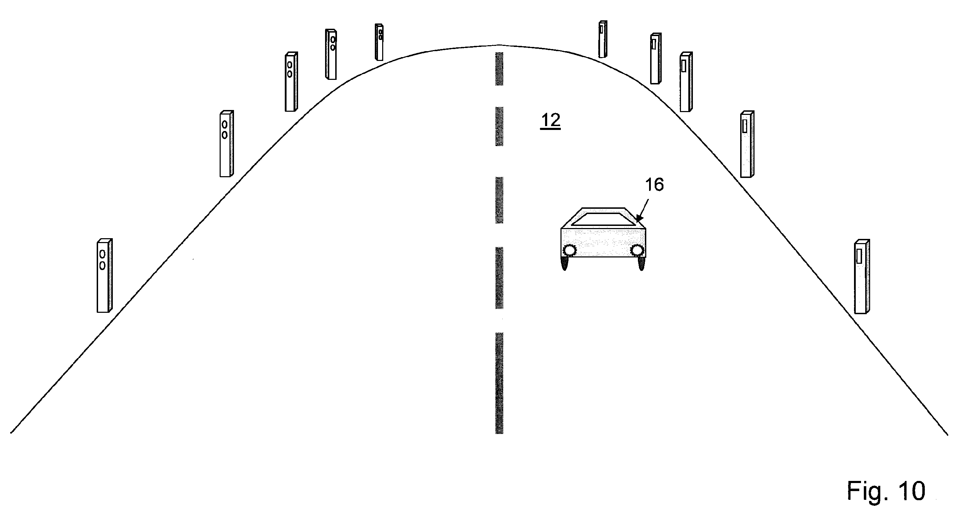

In Figur 10 ist eine Aufnahme einer Verkehrssituation ähnlich der Verkehrssituation nach den Figuren 7 bis 9 gezeigt, die mit Hilfe einer im nachfolgenden Fahrzeug 14 angeordneten Kamera 18 aufgenommen worden ist. Die Fahrbahn 12 fällt bei der in Figur 10 dargestellten Verkehrssituation jedoch erst vor dem vorausfahrenden Fahrzeug 16 ab.

Allgemein beruht die Erfindung auf der Erkenntnis, die Lichtabgabe des Fahrzeugs 14 an den vertikalen Verlauf der Fahrbahn 12 anzupassen. Dabei ist insbesondere der vertikale Verlauf der Fahrbahn 12 in dem auszuleuchtenden Bereich vor dem Fahrzeug 14 und/oder in dem mit Hilfe mindestens eines Scheinwerfers 20, 22 des Fahrzeugs 14 ausleuchtbaren Bereich vor dem Fahrzeug 14 relevant, um die Lichtabgabe des Fahrzeugs 14 anzupassen. Mit Hilfe des mindestens einen Scheinwerfers 20, 22 des Fahrzeugs 14 erfolgt dann die entsprechende Ausleuchtung des ausleuchtbaren Bereichs vor dem Fahrzeug 14 abhängig von dem ermittelten vertikalen Verlauf der Fahrbahn 12.

Dabei ist vorteilhaft, den vertikalen Abstand zwischen einer zur Längsachse des Fahrzeugs 14 parallel verlaufenden X-Achse des Fahrzeugkoordinatensystems und der Fahrbahn 12 im Bereich des Sollabstandes 44 einer mit Hilfe der durch die von mindestens einem Scheinwerfer 20, 22 des Fahrzeugs 14 zur Lichtabgabe erzeugten Lichtstrahlen bewirkten Hell-Dunkel-Grenze zu ermitteln. Die Lichtabgabe des Fahrzeugs 14 wird dann abhängig vom ermittelten vertikalen Abstand an den vertikalen Verlauf der Fahrbahn 12 angepasst.

Dabei ist es vorteilhaft, wenn der Sollabstand 44 der Hell-Dunkel-Grenze auf einer Geraden zwischen dem Fahrzeug 14 und der Fahrbahn 12 festgelegt wird, wobei die Gerade die Fahrbahn 12 im Sollabstand 44 der Hell-Dunkel-Grenze schneidet Auf einer die Gerade im Sollabstand rechtwinklig schneidenden weiteren Geraden wird der Abstand zwischen dem Schnittpunkt der weiteren Geraden mit der X-Achse des Fahrzeugkoordinatensystems und dem Schnittpunkt der weiteren Geraden mit der Geraden als vertikaler Abstand ermittelt. Bei einem ermittelten positiven vertikalen Abstand werden die von mindestens einem Scheinwerfer 20, 22 des Fahrzeugs 14 abgegebenen Lichtstrahlen angehoben. Bei einem negativen vertikalen Abstand werden die von mindestens einem Scheinwerfer 20, 22 des Fahrzeugs 14 abgegebenen Lichtstrahlen abgesenkt. Alternativ oder zusätzlich kann als vertikaler Verlauf der Fahrbahn 12 die Änderung des Anstiegs der Fahrbahn 12 ermittelt werden. Bei einem ermittelten positiven Anstieg des Verlaufs der Fahrbahn 12 im Bereich zwischen dem Fahrzeug 14 und der in einem Sollabstand 44 zu erzeugenden Hell-Dunkel-Grenze werden die von mindestens einem Scheinwerfer 20, 22 des Fahrzeugs 14 abgegebenen Lichtstrahlen angehoben. Bei einem negativen Anstieg des Verlaufs der Fahrbahn 12 und der in einem Sollabstand 44 zu erzeugenden Hell-Dunkel-Grenze werden die von mindestens einem Scheinwerfer 20, 22 des Fahrzeugs 14 abgegebenen Lichtstrahlen abgesenkt. Dabei wird der Anstieg der Fahrbahn 12 vorzugsweise bezogen auf die X-Achse des Koordinatensystems des Fahrzeugs 14 ermittelt, wobei die X-Achse des Koordinatensystems im Wesentlichen parallel zur Längsachse des Fahrzeugs 14 verläuft. Der Anstieg kann dabei den Verlauf der Fahrbahn 12 zwischen dem Fahrzeug 14 und einer in einem Sollabstand 44 vor dem Fahrzeug 14 zu positionierenden Hell-Dunkel-Grenze aufintegriert werden. Dabei wird vorzugsweise das Integral dz/dx über den Sollabstand 44 gebildet.

Alternativ oder zusätzlich kann als vertikaler Verlauf der Fahrbahn 12 der Neigungswinkel zwischen der X-Achse des Koordinatensystems des Fahrzeugs 14 der Geraden ermittelt oder berechnet werden, die durch den Koordinatenursprung 32 des Koordinatensystems und durch den Schnittpunkt der Fahrbahn 12 mit dem Sollabstand 44 einer mit Hilfe mindestens eines Scheinwerfers 20, 22 des Fahrzeugs 14 zu erzeugenden Hell-Dunkel-Grenze im Bereich der Fahrbahn 12 verläuft. Dabei können bei einem positiven Neigungswinkel die von mindesten einem Scheinwerfer 20, 22 des Fahrzeugs 14 abgegebenen Lichtstrahlen angehoben werden. Bei einem negativen Neigungswinkel werden die von dem mindestens einen Scheinwerfer 20, 22 des Fahrzeugs 14 abgegebenen Lichtstrahlen abgesenkt.

Die Lichtabgabe wird vorzugsweise mit Hilfe eines Leuchtweitenregulierungssystems des Fahrzeugs angepasst, durch das die Neigung mindestens eines Scheinwerfers 20, 22, vorzugsweise aller Frontscheinwerfer 20, 22, des Fahrzeugs einstellbar ist. Alternativ oder zusätzlich kann die Lichtabgabe durch die Einstellung der Lichtverteilung mindestens eines Scheinwerfers 20, 22 des Fahrzeugs 14 angepasst werden, insbesondere durch das Vorsehen unterschiedlicher Blenden, durch die der Lichtaustritt der vom Scheinwerfer abgestrahlten Lichtstrahlen beeinflusst bzw. geformt werden kann. Solche Blenden können insbesondere mit Hilfe einer Blendenwalze bereitgestellt werden, die optische Mittel umfasst, die bei unterschiedlichen Walzenstellungen verschiedenartige Lichtfiguren erzeugen. Solche Blendenwalzen werden auch als Blendenwelle bezeichnet. Alternativ oder zusätzlich kann ein so genannter Shutter zum Begrenzen, vorzugsweise zum variablen Begrenzen, der vom jeweiligen Scheinwerfer 20, 22 des Fahrzeugs 14 abgegebenen Lichtstrahlen vorgesehen werden.

Ferner ist es alternativ oder zusätzlich möglich, mehrere Lichtquellen im Scheinwerfer 20, 22 vorzugsweise mit unterschiedlichen Abstrahlwinkeln und/oder in verschiedenen Reflektorbereichen anzuordnen, die einzeln oder in Gruppen zu und abschaltbar sind, wodurch durch das gezielte Einschalten der Lichtquellen die gewünschte Lichtverteilung erreicht wird. Solche Lichtquellen können beispielsweise LED-Arrays sein.

Der vertikale Verlauf der Fahrbahn 12 kann mit Hilfe des durch ein Navigationssystem ermittelbaren Höhenverlaufs oder Höhenunterschieds ermittelt werden. Alternativ oder zusätzlich kann der vertikale Verlauf der Fahrbahn 12 mit Hilfe einer Kamera 18 und eines geeigneten Bildverarbeitungssystems zum Verarbeiten der mit Hilfe der Kamera 18 aufgenommenen Bilder ermittelt werden.

Der Sollabstand 44 der Hell-Dunkel-Grenze zum Fahrzeug 14 wird vorzugsweise auf der X-Achse festgelegt. Der vertikale Abstand wird auf einer die X-Achse im Sollabstand 44 schneidenden Geraden zwischen dem Schnittpunkt der Fahrbahn 12 mit dieser Gerade und dem Schnittpunkt der X-Achse mit der Geraden ermittelt. Der Sollabstand 44 eines mit Hilfe des mindestens einen Scheinwerfers 20, 22 des Fahrzeugs 14 zu erzeugenden Hell-Dunkel-Grenze wird abhängig von entgegenkommendem und/oder vorausfahrendem Verkehr, d. h. von entgegenkommenden und/oder vorausfahrenden Fahrzeugen, festgelegt.

Dabei kann eine Steuereinheit die mit Hilfe von zur Verfügung gestellten Informationen den vertikalen Verlauf der Fahrbahn 12 ermitteln und die Lichtabgabe des Fahrzeugs 14 an den ermittelten vertikalen Verlauf der Fahrbahn 12 anpassen. Die Informationen können dabei von einem Kamerasystem 18 und/oder einem Navigationssystem der Steuereinheit bereitgestellt werden, wobei das Kamerasystem 18 geeignete Bildverarbeitungs- und Bildauswerteeinheiten umfasst.

## Patentansprüche

1. Verfahren zum Steuern der Lichtabgabe eines Fahrzeugs,
bei dem der vertikale Verlauf der Fahrbahn (12) ermittelt wird,
bei dem die Lichtabgabe des Fahrzeugs (14) an den ermittelten vertikalen Verlauf der Fahrbahn (12) mit Hilfe einer Leuchtweitenregulierung mindestens eines Scheinwerfers (20, 22) des Fahrzeugs (14) angepasst wird, **dadurch gekennzeichnet, daß** bei dem die Lichtabgabe des Scheinwerfers (20, 22) zur Verhinderung der Beeinträchtigung anderer Verkehrsteilnehmer mit Hilfe einer Blendeneinstellung einer vor der Lichtquelle des Scheinwerfers (20, 22) angeordneten Blendenanordnung angepasst wird,
wobei die Blendeneinstellung abhängig vom Abstand des Fahrzeugs (14) zu einem vorausfahrenden Fahrzeug (16) und der Höhendifferenz zwischen dem Fahrzeug (14) und dem vorausfahrenden Fahrzeug (16) erfolgt.

2. Verfahren nach Anspruch 1, **dadurch gekennzeichnet, dass** der vertikale Verlauf der Fahrbahn (12) in dem auszuleuchtenden Bereich vor dem Fahrzeug (14) und/oder in dem mit Hilfe mindestens eines Scheinwerfers (20, 22) des Fahrzeugs (14) ausleuchtbaren Bereich vor dem Fahrzeug (14) ermittelt wird, wobei die Lichtabgabe mit Hilfe des mindestens einen Scheinwerfers (20, 22) des Fahrzeugs (14) erfolgt.

3. Verfahren nach einem der vorhergehenden Ansprüche, **dadurch gekennzeichnet, dass** unter der Bedingung, dass die Fahrbahn im Sollabstand (44) sich nicht aufgrund der abfallenden Fahrbahn in einem Schattenbereich befindet, ein vertikaler Abstand zwischen einer zur Längsachse des Fahrzeugs (14) parallel verlaufenden X-Achse eines Fahrzeugkoordinatensystems und der Fahrbahn (12) in einem Sollabstand (44) ermittelt wird,
und dass die Lichtabgabe des Fahrzeugs (14) abhängig von dem ermittelten vertikalen Abstand durch die Leuchtweitenregulierung an den vertikalen Verlauf der Fahrbahn (12) angepasst wird,
wobei wenn die Bedingung nicht erfüllt ist, die Lichtabgabe von der Leuchtweitenregulierung so angepasst wird, dass Lichtstrahlen der Hell-Dunkel-Grenze, die ohne Rücksicht auf andere Verkehrteilnehmer erzeugt ist bzw. wäre, die Fahrbahn (12) tangieren.

4. Verfahren nach Anspruch 3 **dadurch gekennzeichnet, dass** bei einem ermittelten positiven vertikalen Abstand die von mindestens einem Scheinwerfer (20, 22) des Fahrzeugs (14) abgegebenen Lichtstrahlen angehoben werden, und
dass bei einem negativen vertikalen Abstand die von mindestens einem Scheinwerfer (20, 22) des Fahrzeugs (14) abgegebenen Lichtstrahlen abgesenkt werden.

5. Verfahren nach einem der vorhergehenden Ansprüche, **dadurch gekennzeichnet, dass** als vertikaler Verlauf der Fahrbahn (12) die Änderung des Anstiegs der Fahrbahn (12) ermittelt wird.

6. Verfahren nach Anspruch 5, **dadurch gekennzeichnet**
**dass** bei einem positiven Anstieg des Verlaufs der Fahrbahn (12) im Bereich zwischen dem Fahrzeug (14) und einem Sollabstand (44) die von mindestens einem Scheinwerfer (20, 22) des Fahrzeugs (14) abgegebenen Lichtstrahlen angehoben werden, und
**dass** bei einem negativen Anstieg des Verlaufs der Fahrbahn (12) im Bereich zwischen dem Fahrzeug (14) und dem Sollabstand (14) die von dem mindestens einem Scheinwerfer (20, 22) des Fahrzeugs (14) abgegebenen Lichtstrahlen abgesenkt werden.

7. Verfahren nach Anspruch 5 or 6, **dadurch gekennzeichnet, dass**
der Anstieg der Fahrbahn (12) bezogen auf die X-Achse eines Fahrzeugkoordinatensystems ermittelt wird, wobei die X-Achse im Wesentlichen parallel zur Längsachse des Fahrzeugs (14) verläuft, und dass der Anstieg über den Verlauf der Fahrbahn (12) zwischen Fahrzeug (14) und einem Punkt der Fahrbahn im Sollabstand (44) vor dem Fahrzeug (14) aufintegriert wird.

8. Verfahren nach einem der vorhergehenden Ansprüche, **dadurch gekennzeichnet, dass** als vertikaler Verlauf der Fahrbahn (12) der Neigungswinkel zwischen der X-Achse eines Koordinatensystems des Fahrzeugs (14) und der Geraden ermittelt wird, die durch den Koordinatenursprung (32) des Koordinatensystems und durch den Schnittpunkt Geraden mit der Fahrbahn (12) im Sollabstand (44) vor dem Fahrzeug (14) verläuft.

9. Verfahren nach Anspruch 8, **dadurch gekennzeichnet, dass** bei einem positiven Neigungswinkel die von mindestens einem Scheinwerfer (20, 22) des Fahrzeugs (14) abgegebenen Lichtstrahlen angehoben werden, und
dass bei einem negativen Neigungswinkel die von dem mindestens einen Scheinwerfer (20, 22) des Fahrzeugs (14) abgegebenen Lichtstrahlen abgesenkt werden.

10. Verfahren nach einem der vorhergehenden Ansprüche, **dadurch gekennzeichnet, dass** die Lichtabgabe mit Hilfe eines Leuchtweitenregulierungssystem des Fahrzeugs (14) angepasst wird, durch das die Neigung mindestens eines Scheinwerfers (20, 22), vorzugsweise aller Frontscheinwerfer, des Fahrzeugs einstellbar ist, und/oder dass die Lichtabgabe durch eine Einstellung der Lichtverteilung mindestens eines Scheinwerfers (20, 22) des Fahrzeugs (14) angepasst wird.

11. Verfahren nach einem der vorhergehenden Ansprüche, **dadurch gekennzeichnet, dass** der vertikale Verlauf der Fahrbahn (12) mit Hilfe des durch ein Navigationssystem ermittelbaren Höhenverlaufs oder Höhenunterschieds ermittelt wird.

12. Verfahren nach einem der vorhergehenden Ansprüche, **dadurch gekennzeichnet, dass** der vertikale Verlauf der Fahrbahn (14) mit Hilfe einer Kamera (18) ermittelt wird.

13. Verfahren nach einem der vorhergehenden Ansprüche 3 und 4,
**dadurch gekennzeichnet, dass** der Sollabstand (44) zum Fahrzeug (14) auf der X-Achse festgelegt wird,
und dass der vertikale Abstand auf einer die X-Achse im Sollabstand (44) rechtwinklig schneidenden Geraden zwischen deren Schnittpunkt mit der Fahrbahn (12) und deren Schnittpunkt mit der X-Achse ermittelt wird.

14. Vorrichtung zum Steuern der Lichtabgabe eines Kraftfahrzeugs,
mit einer Steuereinheit,
die mit Hilfe von zur Verfügung gestellten Informationen den vertikalen Verlauf der Fahrbahn (12) ermittelt,
die die Lichtabgabe des Fahrzeugs (14) abhängig von dem ermittelten vertikalen Verlauf der Fahrbahn (12) mit Hilfe einer Leuchtweitenregulierung mindestens eines Scheinwerfers (20, 22) des Fahrzeugs (14) anpasst, **dadurch gekennzeichnet, dass** die Steuereinheit die Lichtabgabe des Scheinwerfers (20, 22) zur Verhinderung der Beeinträchtigung des Verkehrsteilnehmers mit Hilfe einer Blendeneinstellung einer vor der Lichtquelle des Scheinwerfers (20, 22) angeordneten Blendenanordnung anpasst, wobei die Blendeneinstellung abhängig vom Abstand des Fahrzeugs (14) zu einem vorausfahrenden Fahrzeug (16) und der Höhendifferenz zwischen dem Fahrzeug (14) und dem vorausfahrenden Fahrzeug (16) erfolgt.

15. Vorrichtung nach Anspruch 14, **dadurch gekennzeichnet, dass** ein
Kamerasystem und/oder ein Navigationssystem der Steuerreinheit die Informationen bereitstellen.

## Claims

1. A method for controlling the light emission of a vehicle, in which the vertical course of the roadway (12) is determined, in which the light emission of the vehicle (14) is adapted to the determined vertical course of the roadway (12) by means of a headlight range regulation of at least one headlight (20, 22) of the vehicle (14),
**characterized in that** the light emission of the headlight (20, 22) is adapted by means of an aperture setting of an aperture arrangement arranged in front of the light source of the headlight (20, 22) for preventing the impairment of other road users,
wherein the aperture setting is made dependent on the distance of the vehicle (14) to a vehicle (16) driving ahead and the height difference between the vehicle (14) and the vehicle (16) driving ahead.

2. The method according to claim 1, **characterized in that** the vertical course of the roadway (12) in the area to be illuminated in front of the vehicle (14) and/or in the area in front of the vehicle (14) which can be illuminated by means of at least one headlight (20, 22) of the vehicle (14) is determined, wherein the light emission takes place by means of the at least one headlight (20, 22) of the vehicle (14).

3. The method according to one of the preceding claims, **characterized in that** under the condition that the roadway at the target distance (44) is not in a shadow area due to the downward sloping roadway, a vertical distance between an X-axis of a vehicle coordinate system running parallel to the longitudinal axis of the vehicle (14) and the roadway (12) at a target distance (44) is determined,
and that the light emission of the vehicle (14) is adapted dependent on the determined vertical distance by the headlight range regulation to the vertical course of the roadway (12),
wherein, when the condition is not satisfied, the light emission is adapted by the headlight range regulation such that light beams of the light-dark boundary which is or would be generated regardless of other road users are tangent to the roadway (12).

4. The method according to claim 3, **characterized in that** in the case of a determined positive vertical distance the light beams emitted by at least one headlight (20, 22) of the vehicle (14) are raised, and that in the case of a negative vertical distance the light beams emitted by at least one headlight (20, 22) of the vehicle (14) are lowered.

5. The method according to one of the preceding claims, **characterized in that** as a vertical course of the roadway (12) the change of the climb of the roadway (12) is determined.

6. The method according to claim 5, **characterized in that** in the case of a positive climb of the course of the roadway (12) in the area between the vehicle (14) and a target distance (44) the light beams emitted by at least one headlight (20, 22) of the vehicle (14) are raised, and
that in the case of a negative climb of the course of the roadway (12) in the area between the vehicle (14) and the target distance (14) the light beams emitted by the at least one headlight (20, 22) of the vehicle (14) are lowered.

7. The method according to claim 5 or 6, **characterized in that** the climb of the roadway (12) with respect to the X-axis of a vehicle coordinate system is determined, wherein the X-axis runs substantially parallel to the longitudinal axis of the vehicle (14), and
that the climb is integrated over the course of the roadway (12) between vehicle (14) and a point of the roadway at the target distance (44) in front of the vehicle (14).

8. The method according to one of the preceding claims, **characterized in that** as a vertical course of the roadway (12) the angle of inclination between the X-axis of a coordinate system of the vehicle (14) and the straight line is determined which runs through the coordinate origin (32) of the coordinate system and through the point of intersection between the straight line and the roadway (12) at the target distance (44) in front of the vehicle (14).

9. The method according to claim 8, **characterized in that** in the case of a positive angle of inclination the light beams emitted by at least one headlight (20, 22) of the vehicle (14) are raised, and
that in the case of a negative angle of inclination the light beams emitted by the at least one headlight (20, 22) of the vehicle (14) are lowered.

10. The method according to one of the preceding claims, **characterized in that** the light emission is adapted by means of a headlight range regulation system of the vehicle (14), by which the inclination of at least one headlight (20, 22) preferably of all front headlights, of the vehicle is adjustable, and/or
that the light emission is adapted by an adjustment of the light distribution of at least one headlight (20, 22) of the vehicle (14).

11. The method according to one of the preceding claims, **characterized in that** the vertical course of the roadway (12) is determined by means of the height course or height difference that is determinable by a navigation system.

12. The method according to one of the preceding claims, **characterized in that** the vertical course of the roadway (14) is determined by means of a camera (18).

13. The method according to one of the preceding claims 3 and 4,
**characterized in that** the target distance (44) to the vehicle (14) is defined on the X-axis,
and that the vertical distance is determined on a straight line between its point of intersection with the roadway (12) and its point of intersection with the X-axis, which straight line intersects the X-axis at the target distance (44) at right angles.

14. A device for controlling the light emission of a motor vehicle,
with a control unit which determines by means of available information the vertical course of the roadway (12),
which adapts the light emission of the vehicle (14) dependent on the determined vertical course of the roadway (12) by means of a headlight range regulation of at least one headlight (20, 22) of the vehicle (14), **characterized in that** the control unit adapts the light emission of the headlight (20, 22) by means of an aperture setting of an aperture arrangement arranged in front of the light source of the headlight (20, 22) for preventing an impairment of the road user,
wherein the aperture setting is made dependent on the distance of the vehicle (14) to a vehicle (16) driving ahead and the height difference between the vehicle (14) and the vehicle (16) driving ahead.

15. The device according to claim 14, **characterized in that** a camera system and/or a navigation system of the control unit provide the information.

## Revendications

1. Procédé de commande de l'émission de lumière d'un véhicule,
selon lequel le tracé vertical de la chaussée (12) est déterminé,
selon lequel l'émission de lumière du véhicule (14) est adaptée au tracé vertical déterminé de la chaussée (12) à l'aide d'un réglage de la portée lumineuse d'au moins un projecteur (20, 22) du véhicule (14),
**caractérisé en ce que**
l'émission de lumière du projecteur (20, 22) est adaptée à empêcher de porter préjudice à d'autres usagers de la route, à l'aide d'un réglage d'obturation d'un ensemble d'obturation disposé devant la source de lumière du projecteur (20, 22),
le réglage de l'obturation étant mis en oeuvre en fonction de l'écart entre le véhicule (14) et un véhicule (16) roulant devant ce dernier et de la différence de hauteur entre le véhicule (14) et le véhicule (16) roulant devant ce dernier.

2. Procédé selon la revendication 1, **caractérisé en ce que** le tracé vertical de la chaussée (12) dans la zone à éclairer devant le véhicule (14) et/ou dans la zone située devant le véhicule (14) et pouvant être éclairée à l'aide d'au moins un projecteur (20, 22) du véhicule (14) est déterminé, l'émission de lumière étant mise en oeuvre à l'aide du ou des projecteurs (20, 22) du véhicule (14).

3. Procédé selon l'une quelconque des revendications précédentes, **caractérisé en ce que**, à condition que la chaussée dans l'écart théorique (44) ne se situe pas dans une zone d'ombre en raison d'une chaussée descendante,
un écart vertical entre un axe X d'un système de coordonnées s'étendant parallèlement à l'axe longitudinal du véhicule (14) et la chaussée (12) dans un écart théorique (44) est déterminé,
et **en ce que** l'émission de lumière du véhicule (14) est adaptée au tracé vertical de la chaussée (12) par le réglage de la portée lumineuse en fonction de l'écart vertical déterminé,
l'émission de lumière n'étant pas adaptée par le réglage de la portée lumineuse si la condition n'est pas remplie, de sorte que les faisceaux lumineux de la limite clair-obscur, qui est ou serait produite sans prendre en considération les autres usagers de la route, touchent la chaussée (12).

4. Procédé selon la revendication 3,
**caractérisé en ce que** lorsqu'un écart vertical positif est déterminé, les faisceaux lumineux émis par le ou les projecteurs (20, 22) du véhicule (14) sont levés, et
**en ce que** dans le cas d'un écart vertical négatif, les faisceaux lumineux émis par le ou les projecteurs (20, 22) du véhicule (14) sont baissés.

5. Procédé selon l'une quelconque des revendications précédentes, **caractérisé en ce que** la variation de la montée de la chaussée (12) est déterminée comme tracé vertical de la chaussée (12).

6. Procédé selon la revendication 5,
**caractérisé en ce que** dans le cas d'une montée positive du tracé de la chaussée (12), les faisceaux lumineux émis par au moins un projecteur (20, 22) du véhicule (14) sont levés dans la zone située entre le véhicule (14) et un écart théorique (44), et
**en ce que** dans le cas d'une montée négative du tracé de la chaussée (12), les faisceaux lumineux émis par le ou les projecteurs (20, 22) du véhicule (14) sont baissés dans la zone située entre le véhicule (14) et l'écart théorique (14).

7. Procédé selon la revendication 5 ou 6,
**caractérisé en ce que**
la montée de la chaussée (12) est déterminée par rapport à l'axe X d'un système de coordonnées de véhicule, l'axe X s'étendant sensiblement parallèlement à l'axe longitudinal du véhicule (14), et
**en ce que** la montée sur toute l'étendue du tracé de la chaussée (12) entre le véhicule (14) et un point de la chaussée dans l'écart théorique (44) situé devant le véhicule (14) est intégrée.

8. Procédé selon l'une quelconque des revendications précédentes, **caractérisé en ce que** l'angle d'inclinaison entre l'axe X d'un système de coordonnées du véhicule (14) et la droite qui s'étend à travers l'origine des coordonnées (32) du système de coordonnées et à travers le point d'intersection entre ladite droite et la chaussée (12) dans l'écart théorique (44) devant le véhicule (14) est déterminé comme tracé vertical de la chaussée (12).

9. Procédé selon la revendication 8, **caractérisé en ce que** dans le cas d'un angle d'inclinaison positif, les faisceaux lumineux émis par le ou les projecteurs (20, 22) du véhicule (14) sont levés, et
**en ce que** dans le cas d'un angle d'inclinaison négatif, les faisceaux lumineux émis par le ou les projecteurs (20, 22) du véhicule (14) sont baissés.

10. Procédé selon l'une quelconque des revendications précédentes, **caractérisé en ce que** l'émission de lumière est adaptée à l'aide d'un système de réglage de la portée lumineuse du véhicule (14), lequel permet de régler l'inclinaison d'au moins un projecteur (20, 22), de préférence de tous les projecteurs avant, du véhicule, et/ou
**en ce que** l'émission de lumière est adaptée par un réglage de la distribution lumineuse d'au moins un projecteur (20, 22) du véhicule (14).

11. Procédé selon l'une quelconque des revendications précédentes, **caractérisé en ce que** le tracé vertical de la chaussée (12) est déterminé à l'aide du tracé en hauteur ou de la différence de hauteur pouvant être déterminés par un système de navigation.

12. Procédé selon l'une quelconque des revendications précédentes, **caractérisé en ce que** le tracé vertical de la chaussée (14) est déterminé à l'aide d'une caméra (18).

13. Procédé selon l'une quelconque des revendications 3 et 4,
**caractérisé en ce que** l'écart théorique (44) par rapport au véhicule (14) est défini sur l'axe X,
et **en ce que** l'écart vertical sur une droite perpendiculaire à l'axe X dans l'écart théorique (44) entre le point d'intersection de ladite droite avec la chaussée (12) et le point d'intersection de ladite droite avec l'axe X est déterminé.

14. Dispositif de commande de l'émission de lumière d'un véhicule automobile,
comprenant une unité de commande,
qui détermine le tracé vertical de la chaussée (12) à l'aide d'informations mises à disposition,
qui adapte l'émission de lumière du véhicule (14) en fonction du tracé vertical déterminé de la chaussée (12) à l'aide d'un réglage de la portée lumineuse d'au moins un projecteur (20, 22) du véhicule (14), **caractérisé en ce que**
l'unité de commande adapte l'émission de lumière du projecteur (20, 22) pour empêcher qu'elle ne porte préjudice à l'usager de la route, à l'aide d'un réglage d'obturation d'un ensemble d'obturation disposé devant la source de lumière du projecteur (20, 22),
le réglage de l'obturation étant mis en oeuvre en fonction de l'écart entre le véhicule (14) et un véhicule (16) roulant devant ce dernier et de la différence de hauteur entre le véhicule (14) et le véhicule (16) roulant devant ce dernier.

15. Dispositif selon la revendication 14,
**caractérisé en ce qu'**un système de caméra et/ou un système de navigation de l'unité de commande fournissent les informations.
